(19) **Europäisches Patentamt / European Patent Office / Office européen des brevets**

(11) **EP 3 520 028 B1**

(12) **EUROPEAN PATENT SPECIFICATION**

(45) Date of publication and mention
of the grant of the patent:
**30.03.2022 Bulletin 2022/13**

(21) Application number: **16917864.7**

(22) Date of filing: **27.09.2016**

(51) International Patent Classification (IPC):
**G06K 15/02** $^{(2006.01)}$       **H04N 1/387** $^{(2006.01)}$
**H04N 1/409** $^{(2006.01)}$

(52) Cooperative Patent Classification (CPC):
**H04N 1/52; H04N 1/387; H04N 1/4052; H04N 1/409**

(86) International application number:
**PCT/US2016/053926**

(87) International publication number:
**WO 2018/063153 (05.04.2018 Gazette 2018/14)**

(54) **ERROR DIFFUSION**

FEHLERDIFFUSION

DIFFUSION D'ERREUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2019 Bulletin 2019/32**

(73) Proprietor: **Hewlett-Packard Development Company, L.P.**
**Spring TX 77389 (US)**

(72) Inventors:
• **MOROVIC, Jan**
 **Colchester, Essex CO3 4SJ (GB)**

• **MOROVIC, Peter**
 **08174 Sant Cugat del Valles (ES)**

(74) Representative: **Haseltine Lake Kempner LLP**
**Redcliff Quay**
**120 Redcliff Street**
**Bristol BS1 6HU (GB)**

(56) References cited:
**US-A- 5 949 965        US-A- 5 949 965**
**US-A1- 2007 268 525        US-A1- 2016 037 017**
**US-A1- 2016 151 979        US-B1- 6 172 768**
**US-B1- 6 172 768**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

Printing systems may convert input data (for example, data representing an image for two-dimensional printing, or data representing an object for three dimensional printing) to print control data, which specifies where print materials (for example, colourants such as inks or toners or other printable materials) are to be placed in a print operation.

Techniques used in converting data include error diffusion, in which a particular print material or material combination is assigned from a selection of possible print materials and/or material combinations for a given location. For example, a print material may be selected such that a drop of a particular colour ink will be placed at a particular pixel to form an image. An 'error' associated with selecting this or these print materials and not another of the possible print material(s) is distributed to at least one other location, usually reducing the probability of the same print material(s) being assigned to the other location(s).

US 2007/0268525 discloses a halftoning system which uses Floyd-Steinberg error diffusion.

BRIEF DESCRIPTION OF DRAWINGS

For a more complete understanding, reference is now made to the following description taken in conjunction with the accompanying drawings in which:

Figure 1 is a flowchart of an example method of error diffusion;
Figure 2 is a flowchart of another example method of error diffusion;
Figure 3 is a simplified schematic of an example processing apparatus;
Figure 4 is a simplified schematic of another example processing apparatus; and
Figure 5 is a simplified schematic of an example non-transitory machine readable medium associated with a processor.

DETAILED DESCRIPTION

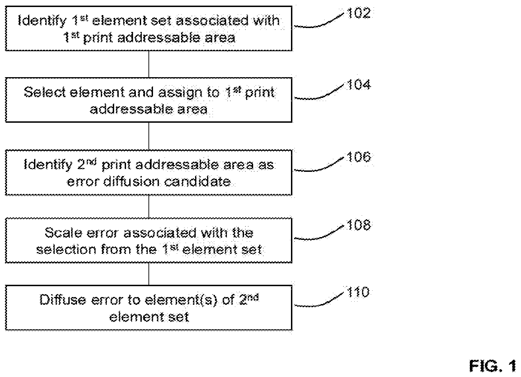

Figure 1 shows a method, which may be implemented on any suitable any processor or processing apparatus (for example, computer or printer), and which may be a method of processing data for use in printing using error diffusion techniques. In some examples, the method may be carried out on data for use in printing which may for example comprise data representing an image intended to be printed in two-dimensional printing, or data representing an object to be generated in three dimensional printing.

In block 102, a first element set associated with a first print addressable area is identified within data for use in printing, wherein elements of the element set are each associated with a print instruction. In examples, the print instruction identifies print material or material combination. In examples, a print addressable area is assigned an element set indicative of one or more possible print instructions based on received input print data.

For example, in the case of two dimensional printing, a print addressable area may comprise at least one pixel, and the element set may comprise colourants such as inks (for example cyan, magenta, yellow and black inks), coatings or other print materials, as well as combinations of those colourants (for example, cyan over printed with magenta), coatings, etc.

In the case of three dimensional printing, which is also referred to as additive manufacturing, three-dimensional space may be characterised in terms of 'voxels', i.e. three-dimensional pixels, wherein each voxel occupies or represents a discrete volume. In examples of three dimensional printing therefore, an addressable area may comprise at least one voxel and the set of elements may comprise one or a combination of agents and/or build materials.

To briefly discuss three-dimensional printing in greater detail, objects generated by an additive manufacturing process may be formed in a layer-by-layer manner. In one example, an object is generated by solidifying portions of layers of build material. In examples, the build material may be in the form of a powder, fluid or sheet material. The intended solidification and/or physical properties may be achieved by printing an agent onto a layer of the build material. Energy may be applied to the layer and the build material on which an agent has been applied may coalesce and solidify upon cooling. In other examples, chemical binding agents may be used to solidify a build material. In other examples, three-dimensional objects may be generated by using extruded plastics or sprayed materials as build materials, which solidify to form an object. Some processes that generate three-dimensional objects use control data generated from a model of a three-dimensional object. This control data may, for example, specify the locations at which to apply an agent to the build material, or where a build material itself may be placed, and the amounts to be placed. The control data may be generated from a 3D representation of an object to be printed. Locations may be expressed in terms of voxels. A voxel at a given location may have at least one characteristic. For example, it may be empty, or may have a particular colour or may represent a particular material, or a particular object property, or the like. In general, the voxels of an object may have the same shape (for example, cubic or tetrahedral), or may differ in shape and/or size. However, where the term voxel is used herein to refer to a print addressable area, the voxel size may be determined at the print resolution of a print apparatus, i.e. it may correspond to a volume which can be individually addressed by a print apparatus (which may be a particular print apparatus, of a class of print apparatus, or the like).

It may be that print materials are specified explicitly within an element set, i.e. at least one of the set of elements is in effect a set of print materials and/or print material combinations. In other examples, it may be that at least one of the elements relates to other qualities, which may in turn be related to print materials. For example, the elements may specify a property or the like which can be mapped to print materials. In another example, a colour may be specified in terms of a Neugebauer Primary (NP). An NP identifies a colour or a colour combination from a set of colours and colour combinations, which can be applied by a particular print apparatus. The colours and colour combinations identified by an NP may in turn may have predetermined mappings to colourants.

In some examples, the set of elements is expressed as a print material coverage representation, which defines print material data. For example, the print material coverage representation may specify (explicitly or implicitly, for example via a mapping) the amount of print materials or their combinations (such as a colourant or coating for two dimensional printing). In case of three dimensional printing, the print material coverage representation may specify an agent(s) to be deposited onto a layer of build material, or build materials themselves, and, if applicable, their combinations. Such print materials may be related to or selected to provide an image or object property such as, for example, colour, transparency, flexibility, elasticity, rigidity, surface roughness, porosity, conductivity, inter-layer strength, density, and the like.

For example, a print addressable location within input data (for example, a pixel in image data or a voxel in object model data) may be associated with one or a set of print material coverage representations, for example comprising a set of print material coverage vectors. In the case of two dimensional printing, these may be referred to as area coverage vectors. For example, the vectors may comprise ink vectors, which specify proportions of inks to be applied (and may therefore be thought of as native to a printer) or Neugebauer Primary Area Coverage vectors (NPac vectors, or simply NPacs), which may specify colours in a manner which may be associated with inks or other colourants via a mapping (for example, using a look up table). By analogy, in three dimensional printing, Material Volume coverage vectors (termed Material vectors, or simply Mvocs, herein) may be defined. Such vectors provide a probability that a print material may be applied in a location. In a simple case, such a vector may indicate that X% of a given region should have a particular print material applied thereto, whereas (100-X)% should be left clear of the print material. In practice, this may be resolved at the addressable resolution for the print material and/or printing device. Therefore, if there are NxM addressable locations in an XY plane, X% of these locations may receive a print material, while (100-X)% may not.

Such a print material coverage representation may provide a plurality of values, wherein (at least initially) each value defines a probability for each, or each combination of print materials in an addressable location. For example, in a printing system with two available print materials (for example, inks, coatings or agents) - M1 and M2, where each print material may be independently deposited in an addressable area (for example voxel or pixel), there may be $2^2$ (i.e. four) probabilities in a given material coverage vector: a first probability for M1 without M2; a second probability for M2 without M1; a third probability for an over-deposit (i.e. a combination) of M1 and M2, for example M2 deposited over M1 or vice versa; and a fourth probability for an absence of both M1 and M2. In this example, it is assumed that a drop of print material may be applied or not: this a binary choice and the value for each agent may be either 0 or 1. In this case, a coverage vector may be: [M1,M2, M1 M2, Z] or with example probabilities [M1:0.2, M2:0.2, M1M2: 0.5, Z:0.1] - in a set of print addressable locations (for example and [x, y] or an [x, y, z] location (which in some examples may be a [x, y] location in a z slice)) to which the coverage vector applies, 20% of locations are to receive M1 without M2, 20% are to receive M2 without M1, 50% are to receive M1 and M2 and 10% are to be left clear. As each value is a proportion and the set of values represent the available material combinations, the set of values in each vector sum to 1 or 100%. In some examples, the probability associated with an element may also specified as a negative value, as will be explained below.

Such a print material coverage vector therefore specifies a plurality of elements which are related to print materials, and a probability for each element which is represented as a value between 0 and 1.

In block 104, the method continues by selecting an element from the first element set and assigning the element to the first print addressable area. In examples therefore, a particular print instruction may be assigned to a pixel or a voxel, for example to be used in control data for printing that pixel/voxel. In some examples this may comprise selecting the element associated with the highest probability (in the example above, a combination of M1 and M2). If there are two elements that have a joint highest probability, one may be selected, for example at random. In other examples, an initial value may be selected in some other way.

Block 106 comprises identifying a second print addressable area as a candidate print addressable area for error diffusion. In this example, the second print addressable area is associated with a second element set (for example implemented as a print material coverage representation such as an NPac or Mvoc vector). In some examples, the error diffusion candidate print addressable area may be a relatively near spatial neighbour of the first print addressable area, for example, an adjacent area which shares an edge or a face with the first print addressable area, or which shares a corner.

In block 108, an error associated with the selection of the element from the first element set may be scaled based on a criterion. In block 110, the scaled error may be diffused to elements of the second element set. In examples, the scaled error is diffused to elements of the second set that are common between the first and second element sets. In examples, scaling of the error in block 108 may be preceded by a step of identifying common elements of the first and second element sets, and selectively performing the step of scaling in block 108 and the step of diffusing the error in block 110 if common elements are identified.

In examples in which the element sets are material coverage vectors (for example, ink vectors, NPacs, Mvocs or the like), the first and second element sets comprise, respectively, first and second material coverage vectors. In this case, the criterion for scaling the error may include a value associated with an element of the first material coverage vector and a value associated with a corresponding element of the second material coverage vector.

In examples, therefore, diffusing the error may comprise determining an error vector based on the first material coverage vector and the assigned element, the error vector having the first element set (i.e. the element set of the first addressable area). Scaling the error may comprise determining a ratio of the value associated with an element in the second and first material coverage vectors. The ratio may be determined by dividing the value associated with an element in the second material coverage vector by a value associated with a corresponding element in the first material coverage vector. The ratio may then be multiplied by a corresponding element of the error vector, thereby generating a scaled error value for transforming a corresponding element of the second material coverage vector. The second material coverage vector may then be transformed to an error diffused material coverage vector by combining the scaled error for the element and the corresponding element of the second material coverage vector. The error diffused material coverage vector has the same elements as the second element set. In some examples, the error diffusion process may be carried out iteratively for each element of the second element set.

To consider a particular example, if a first pixel at a location [x, y] is associated with an NPac vector expressed as:
[NP1 0.4; NP2 0.3; NP3 0.3],

then the NP with largest area coverage, NP1, may be selected from the NPac and an error vector computed as the difference of the original NPac less than NPac with the single NP which is selected; in this case:
[NP1 0.4; NP2 0.3; NP3 0.3] - [NP1 1] = [NP1 -0.6; NP2 0.3; NP3 0.3].

In other words, the error vector may be determined by subtracting a vector having the first element set in which the selected element has a value of 1 and the other elements have a value of 0 from the first material coverage vector.

This error is then scaled based on the extent that the set of elements of the first and second print addressable areas coincide. In other words, the error is diffused to the common elements as scaling will prevent error propagation to the elements which are present in just one of the first and second element sets.

Assume for the purpose of this example that the error is to be diffused to the second print addressable area, which is initially associated with an NPac of the form:
[NP1 0.2; NP4 0.8].

It will be noted that there is one element, NP1, in common between the NPacs associated with the first and second print addressable areas. Thus, the value for NP1 associated with the second print addressable area may change. In this case, as NP1 is selected and is therefore associated with a negative value in the error vector, the value associated with NP1 for the NPac associated with the second print addressable area may decrease, but the other values will remain unchanged because scaling will prevent error propagation in respect of those elements. It may be noted that the modified NPac in this example would therefore add up to a value which is not equal to one. Initial NPacs, which may be the output of a colour mapping and separation process, will generally sum to one as they define a probability distribution or proportional area coverage. Thus a modified NPac may differ from an initial NPac in this regard. The values therein are still indicative of probabilities, and could be normalised, for example while maintaining the proportions. However, in this example, this is not carried out as the method may iterate by selecting the largest values, which is not dependent on the values summing to 1.

In this example, the error is scaled by calculating the ratio of NP1 in the second material coverage vector and the first material coverage vector, i.e. 0.2/0.4, and multiplying the ratio with the corresponding element of the error vector, i.e. -0.6, resulting in the scaled error value of:

$$\frac{0.2}{0.4} * -0.6 = -0.3$$

In this example, scaling prevents error diffusion in respect of NP4 because the scaled error will be zero as the ratio of NP4 in the second material coverage vector and the first material coverage vector will be zero. The scaled error is then diffused to the second print addressable area alone, resulting in a modified NPac of:

$$[NP1 \ (-0.3+0.2) = -0.1; \ NP4 \ 0.8].$$

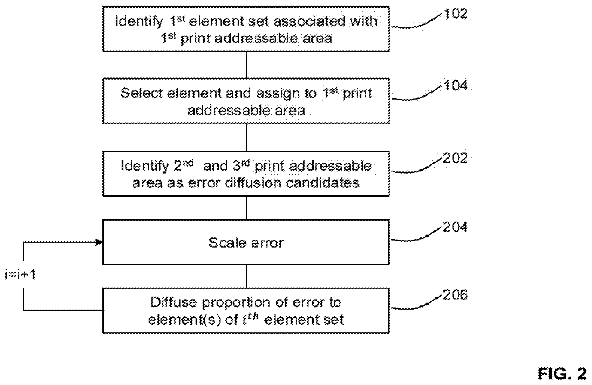

However, as explained below with reference to Figure 2, it may be the case in other examples that the error is diffused to more than one print addressable area.

Thus, in this example, the error is diffused to the possible print instructions already defined for the candidate error diffusion print addressable area, and not with respect to other elements in the first set. In other words, an error diffusion technique implemented according to the method of Figure 1 may alter the weights of the probability distributions in a print material coverage vector for a second print addressable area depending on the values associated with the common print material coverage vectors and without altering the composition of the second element set. The error may also be scaled to take into account area coverage for the common print instructions already defined for the candidate error diffusion print addressable area. That being the case, error diffusion may be proportionally applied in accordance with area coverage of the common elements in the source and target print addressable areas. Therefore, a target print material coverage vector is only significantly transformed if area coverage associated with common elements in its print material coverage vector is high. This may result in increased sharpness, for example in relation to relatively fine details such as lines, hashes, patterns, edges and the like.

Furthermore, the data will not increase in size during processing. In the example above, the elements of the set are unchanged and thus the memory space occupied may also be unchanged. In some examples, an element which is in the original element set for the second print addressable area (NP4 in this example) may be associated with the highest probability, and may not be selected because of scaled error diffusion even though selection of that element may be contemplated in the original element set for the second print addressable area.

This method therefore preserves the original selection of the possible print materials while changing the weighting. In preserving the original element set, the method may provide an alternative to halftoning using a halftoning matrix and may in some examples result in a different output. For example, the methods set out herein may better preserve lines and detailed features than a halftoning matrix, which is designed for image or object properties of varying angles and thickness, or may avoid provision or multiple halftone matrices optimised for different portions of the input data.

In some examples, weights may be assigned to the values of the error vector, and transforming the second material coverage vector comprises combining the weighted values of common elements of the error vector and the second material coverage vector. Considering the above example, NP1, NP2 and NP3 are assigned with weights, respectively .7, .3 and 0, resulting in the weighted value error vector:
[NP1 -0.42; NP2 0.09; NP3 0].

This would result in a scaled error for NP1:

$$\frac{0.2}{0.4} * -0.42 = -0.21$$

The scaled error may then be diffused to the second print addressable area alone, resulting in a modified NPac of:
[NP1 -0.01; NP4 0.8].

Figure 2 shows another example of a method, in this case setting out an example of a method for carrying out error diffusion to a plurality of print addressable regions, with proportions (for example, a share) of the error being assigned to each of the plurality. Blocks 102 and 104 are carried out as described in relation to Figure 1. In block 202, a second and a third print addressable area are identified as candidate print addressable areas for error diffusion, the second and third print addressable areas being associated with a second and third element set respectively. In a first loop (i=2), the error associated with the selection may be scaled in block 204, and a proportion of the scaled error may be diffused to elements of the second element sets in block 206. This loop is then repeated for the third element set. The proportion may be different for each print addressable area. In some examples, diffusing the error to a print addressable area comprises weighting the values of an error vector with a weighting for that print addressable area and combining the weighted values of the common elements of an error vector and the material coverage vector for that print addressable area.

It may be the case that candidate print addressable areas for error diffusion are selected to be near neighbours, for example sharing at least one corner, edge or face with the first print addressable area, or within a particular area count of the first print addressable area. This may reduce blurring associated with error diffusion.

In other examples, there may be more than two candidate print addressable areas considered. For example, the error may be diffused according the 'Floyd Steinberg' approach which uses a serpentine traversal of the addressable areas, where the error is weighted differently to four of the neighbouring print addressable areas (right, right-down, down, left-down). The proportions or weights applied for each area may be predetermined (for example, being seven sixteenths to the area to the right, five sixteenths to the area to the right and down, three sixteenths to the area below and one sixteenth to the area below and left). In other examples alternative area selections may be made, and/or alternative relative proportions applied.

To consider a particular example, the first, second and third print addressable area are originally associated with print coverage representations of the form:

1st print addressable area: [NP1 0.4; NP2 0.3; NP3 0.3];

2nd print addressable area: [NP1 0.2; NP4 0.8];

3rd print addressable area: [NP1 0.4; NP2 0.3; NP3 0.3].

An error vector may be determined as described above as:

[NP1 -0.6; NP2 0.3; NP3 0.3].

This error vector may then be proportionally distributed to the second and third print addressable areas. For example, x/n of the error may be diffused to the second addressable area and (n-x)/n may be diffused to the third print addressable area (where x and n are any number).

Assume that the scaled error in the above example is to be diffused in equal proportions to the second print addressable area and the third print addressable area. In this case, the print coverage representation for the second and third print addressable areas may therefore be transformed to become:

2nd print addressable area (including error):

$$\left[ NP1 \left( \frac{0.2}{0.4} * \frac{-0.6}{2} \right) + 0.2 = 0.05; \right.$$

$$NP4 \ 0.8];$$

3rd print addressable area (including error):

$$\left[ NP1 \left( \frac{0.4}{0.4} * \frac{-0.6}{2} \right) + 0.4 = 0.1; \right.$$

$$NP3 \left( \frac{0.3}{0.3} * \frac{3}{2} \right) + .3 = 0.45].$$

To extend the above example, the error from selection of NP1 for the first print addressable area is also to be applied to a fourth print addressable area with print coverage representation of the form:
4th print addressable area: [NP5 0.5; NP6 0.5].

In this case, the print coverage representation for the second and third print addressable areas may therefore be transformed to become:

2nd print addressable area (including error):

$$\left[ NP1 \left( \frac{0.2}{0.4} * \frac{-0.6}{3} \right) + 0.2 = 0.1; \right.$$

$$NP4 \ 0.8];$$

3rd print addressable area (including error):

$$\left[ NP1 \left( \frac{0.4}{0.4} * \frac{-0.6}{3} \right) + 0.4 = 0.2; \right.$$

$$NP2 \left( \frac{0.3}{0.3} * \frac{3}{3} \right) + .3 = 0.4;$$

$$NP3 \left( \frac{0.3}{0.3} * \frac{3}{3} \right) + .3 = 0.4];$$

4th print addressable area (including error): [NP5 0.5; NP6 0.5].

In this example, the error from selection NP1 for the first print addressable area is not diffused to the fourth print addressable area because there are no common elements between the first and fourth print addressable areas. However, the proportion of the scaled error applied to the second and third print addressable areas factors in the fourth print addressable area because it was considered as a candidate print addressable area.

The method may be iterated, for example according to a space-filling (for example, boustrophedonic) path through the spatial arrangement of the print addressable areas. For example, an element from the second element set (the weights of the elements of which may have been modified by the error diffusion if the second element set has elements in common with the first element set) may be selected and assigned to the second print addressable area. A fifth print addressable area may be identified as a candidate print addressable area for diffusion of error associated with the selection of the element from the second element set. The fifth print addressable area may be associated with a fifth element set. The error may then be diffused to the fifth print addressable area using the process as described above. Specifically, at least a portion of a scaled error associated with the selection of the element from the second element set may be diffused to elements of the fifth element set. Thus, in this way, the error may be diffused in a cumulative manner, but weighted area coverages which are accumulated pertain to the elements which are predetermined for each print addressable area.

Such an example may comprise determining an error vector based on a material coverage vector (which may, in some examples, have been modified by error diffusion) and the assigned element, the error vector having the second element set. A fifth material coverage vector associated with the fifth print addressable area may be transformed to an error diffused material coverage vector for the fifth print addressable area by determining a ratio of each element in the fifth material coverage vector and its corresponding element of the second material coverage vector, and multiplying the ratio for each element with a corresponding element of the error vector resulting in the scaled error value for the elements. The scaled error value(s) is/are then combined with the corresponding values of the elements of the fifth material coverage vector, the error diffused material coverage vector for the fifth print addressable area having the fifth element set.

It will be understood that the terms 'first,' 'second,' third,' 'fourth', and 'fifth' as used herein in relation to the print addressable areas and their elements sets are purely provided as labels to aid understanding of the methods and apparatus described herein. Thus, for example, a print addressable area which undergoes processes described in relation to the second print addressable area may be associated with actions described in relation to the first addressable area in a subsequent process. Moreover (for example when using Floyd-Steinberg error diffusion principles), an element set associated with a particular print addressable area may undergo several transformations as the error of each selection is propagated though the input data.

Thus, while the methods of Figures 1 and 2 may initially be applied to at least one print addressable area defined in input image or object data, they may be applied in subsequent iterations to print addressable areas having associated data related to element sets which has been modified by error diffusion.

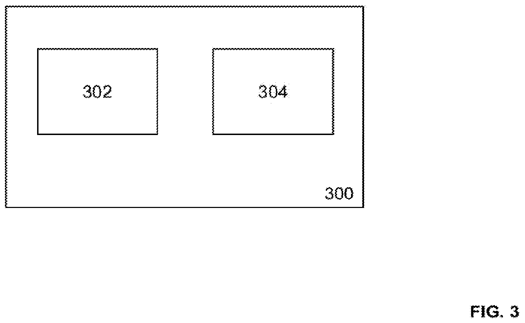

Figure 3 is an example of a processing apparatus 300 comprising a material selection module 302 and an error diffusion module 304.

The modules 302, 304 may be implemented with one or a plurality of processors executing machine readable instructions stored in a memory, or a processor operating in accordance with instructions embedded in logic circuitry.

The material selection module 302 receives data for use in printing (for example image or object data). For example the data may characterise at least one print addressable area, each associated with a respective element set, wherein elements of the element set are each associated with a print instruction. The material selection module 302 selects, from a predetermined first element set (for example, an ink vector, an NPac or an Mvoc as described above, which may be from input print data) an element for a first print addressable area (for example a pixel or a voxel). Each element may be associated with a print instruction, either explicitly or implicitly, for example via a mapping or look up table. In some examples, the elements of a set of elements are associated with a probability and the material selection module 302 may select the element of an element set associated with the highest probability within the set.

The error diffusion module 304 scales an error associated with the selection from the first element set based on a criterion, and diffuses the scaled error to at least a second print addressable area associated with a predetermined second element set characterised in data for use in printing. This may be the same data as the data received by the material selection module 302 or a distinct data set (for example, each pixel/voxel and its associated element set may be treated as a separate data portion). The error may be diffused to elements of the second set, and the error diffusion is carried out such that the elements in the second element set do not change (for example, an element set which makes up a print material coverage vector remains the same). In some examples, the error diffusion module 304 may diffuse a proportion of the error to elements of each of a plurality of print addressable areas.

In some examples, the error diffusion module 304 determines a ratio of the probability associated with an element of the second element set and the probability associated with a corresponding element of the first element set, and scales the error associated with the selection from the first element set based on the determined ratio.

In some examples, the error diffusion process carried out may be iterative. For example, after the error has been diffused to the second print addressable area, the material selection module 302 may select an element of the second print addressable area having a scaled error diffused thereto, and the error diffusion module 304 may diffuse a scaled error associated with the selection from the second set of elements to at least a third print addressable area associated with a predetermined third set of elements, wherein the error may be diffused to elements of the third set, and the error diffusion may be carried out such that the elements in the third element set do not change.

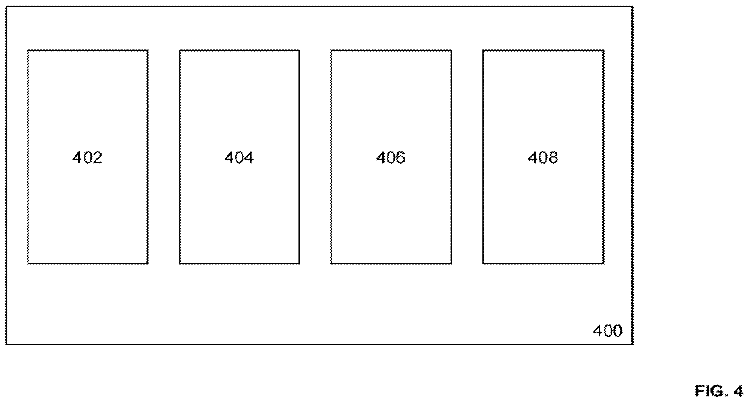

Another example of a processing apparatus 400 is shown in Figure 4. This example comprises a material selection module 402 and an error diffusion module 404, which may be operated according to any of the principles described in relation to the material selection module 302 and error diffusion module 304 of Figure 3.

In this example, the processing apparatus 400 further comprises a control data module 406 and a print apparatus 408. The material selection module 402, error diffusion module 404 and control data module 406 may be implemented with one or a plurality of processors executing machine readable instructions stored in a memory, or a processor operating in accordance with instructions embedded in logic circuitry. It is noted that in at least one example described herein, the term "module" refers to a hardware component of the apparatus.

The control data module 406 determines print control data comprising instructions for the print apparatus 408 to print using the materials or material combinations specified by selected elements in each print addressable area. The print apparatus 408 carries out a print operation (which may be two dimensional or three dimensional print operation) according to the control data.

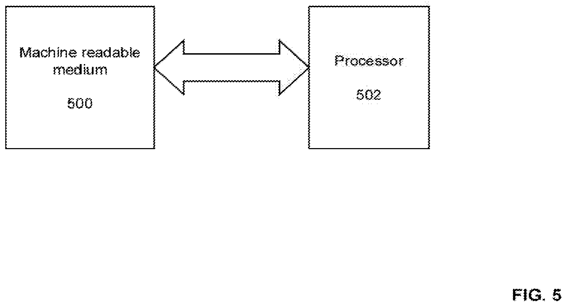

Figure 5 shows an example of a non-transitory machine readable medium 500 associated with a processor 502. The machine may refer to a processor or a processing apparatus. The non-transitory machine readable medium 500 comprises instructions which, when executed by the processor 502, cause the processor 502 to select a print instruction for each print addressable area from candidate possible print instructions associated with received print input data. The print input data may for example comprise image data or object mode! data. The candidate possible print instructions may for example be expressed within a print material coverage representation such as a print material coverage vector, or may be represented in some other way. The candidate possible print instructions for a print addressable area may comprise a set of elements, each element representing a candidate possible print instruction.

The instructions cause the processor 502 to scale an error associated with selected print instruction for a first print addressable area for use to transform print instructions associated with candidate second and third print addressable areas, such that scaling of the error may be based on the candidate print instructions associated with the second and third print addressable areas, and diffusion of the error varies from the second print addressable area to the third print addressable area.

In some examples, the instructions may, when executed thereby, cause the processor 502 to determine print instructions for three-dimensional printing. When used for three-dimensional printing, (as for two-dimensional printing), use of the methods set out herein may mean, for example, that over a print region that has as certain set of possible values (for example, associated with an Mvoc, itself made up of predetermined elements specifying print materials and material combinations (which elements may be termed material vectors, or Mvecs), no other Mvecs are used other than those initially specified. As noted above, this may avoid 'blurring' at the edges/interfaces to other volumes which can be caused by error diffusion, and therefore result in effective preservation of edges, which may comprise relatively small spatial elements in three dimensions. Moreover, in three dimensional printing, the print materials may be intended to impart physical properties such as strength, resilience and the like. By way of example, the print materials may chemical agents, and it may be intended to carefully control chemical properties or reactions by placing certain agents which may have a chemical interaction with others. In such examples, printing a voxel with a material which is not in the initial Mvoc may affect the chemical (or other) properties of a printed three-dimensional objects.

Examples in the present disclosure can be provided as methods, systems or machine readable instructions, such as any combination of software, hardware, firmware or the like. Such machine readable instructions may be included on a non-transitory machine (for example, computer) readable storage medium (including but is not limited to disc storage, CD-ROM, optical storage, etc.) having computer readable program codes therein or thereon.

The present disclosure is described with reference to flow charts and block diagrams of the method, devices and systems according to examples of the present disclosure. Although the flow diagrams described above show a specific order of execution, the order of execution may differ from that which is depicted.

Blocks described in relation to one flow chart may be combined with those of another flow chart. It shall be understood that each flow and/or block in the flow charts and/or block diagrams, as well as combinations of the flows and/or diagrams in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing apparatus, or a module thereof, may execute the machine readable instructions. Thus functional modules of the apparatus 300, 400 (for example, either material selection module 302, 402, either error diffusion module 304, 404, or the control data module 406) and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the present disclosure. It is intended, therefore, that the method, apparatus and related aspects be limited by the scope of the following claims. It should be noted that the above-mentioned examples illustrate rather than limit what is described herein, and that those skilled in the art will be able to design many alternative implementations without departing from the scope of the appended claims. Features described in relation to one example may be combined with features of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method comprising:

   identifying, using a processor (502), within data for use in printing, a first element set associated with a first print addressable area, wherein elements of the element set are each associated with a print instruction, wherein the first element set comprises a firtst material coverage vector in which each element of the element set is associated with a value indicating a probability that the print material or print material combination identified by the element is applied to a print addressable area,
   selecting, using the processor (502), an element from the first element set and assigning the element to the first print addressable area;
   identifying, using the processor (502), a second print addressable area as a candidate print addressable area for error diffusion, the second print addressable area being associated with a second element set comprising a second material coverage vector in which each element of the element set is associated with a value indicating a probability that the print material or print material combination identified by the element is applied to a print addressable area;
   scaling, using the processor (502), an error associated with the selection of the element from the first element set based on a criterion, wherein the criterion for scaling comprises a value associated with an element in the first element set and a value associated with the corresponding element in the second element set, and
   diffusing, using the processor (502), the scaled error to elements of the second element set.

2. A method according to claim 1 in which diffusing the error comprises:

   determining, using the processor (502), an error vector based on the first material coverage vector and the assigned element, the error vector having the first element set,
   determining, using the processor (502), a ratio of the value associated with the element in the second material coverage vector and the value associated with the corresponding element in the first material coverage vector, and multiplying the ratio with a corresponding element of the error vector, thereby scaling the error associated with selection of the assigned element for transforming the corresponding element of the second material coverage vector, and
   transforming, using the processor (502), the second material coverage vector to an error diffused material coverage vector by combining the scaled error and the corresponding element of the second material coverage vector, the error diffused material coverage vector having the second element set.

3. A method according to claim 2 in which transforming the second material coverage vector comprises assigning a weight to each of the values of the error vector and combining the weighted value associated with the corresponding element of the error vector and the second material coverage vector.

4. A method according to claim 1 in which diffusing the error comprises:

   determining, using the processor (502), a third print addressable area in which the error associated with the selection of the element from the first element set is to be diffused, the third print addressable area being associated with a third element set, and
   diffusing a proportion of the scaled error to the second print addressable area and a further proportion to the third print addressable area.

5. A method according to claim 4 in which the scaled error is diffused in equal proportions to the second print addressable area and to the third print addressable area.

6. A method according to claim 4 in which the scaled error is diffused in in accordance with a weighting value associated with the second print addressable area and the third print addressable area, the weighting value indicative of the proportion in which the scaled error is to be diffused in the associated print addressable area.

7. A method according to claim 1 in which the second print addressable area is a spatial neighbour of the first print addressable area.

8. A processing apparatus (400), comprising:

   a memory;
   a processor (502) coupled to the memory;
   a material selection module (302, 402) stored on the memory and configured to cause the processor (502) to:

receive data for use in printing, the data characterising a print addressable area associated with a respective element set, wherein elements of the element set are each associated with a print instruction wherein the element sets comprise material coverage vectors, in which each element of the element set is associated with a value indicating a probability that the print material or print material combination identified by the element is applied to a print addressable area, and

select, from a first element set, an element for a first print addressable area; and

an error diffusion module (304, 404) stored on the memory and configured to cause the processor (502) to:

scale an error associated with the selection from the first element set based on a criterion, and

diffuse the scaled error to at least a second print addressable area **characterised in** data for use in printing and associated with a second element set, wherein the scaled error is diffused to elements the second element set such that the elements in the second element set do not change, wherein the criterion for scaling comprises a value associated with an element in the first element set and a value associated with the corresponding element in the second element set.

9.  The processing apparatus (400) according to claim 8 in which the material selection module (302, 402) is to select the element of an element set associated with the highest probability, and the error diffusion module (304, 404) is to determine a ratio of the probability associated with an element of the second element set and the probability associated with the corresponding element of the first element set, and scale the error associated with the selection from the first element set based on the determined ratio.

10. The processing apparatus (400) according to claim 9 in which the error diffusion module (304, 404) is to diffuse the scaled error by changing the probability associated with the element of the second element set.

11. The processing apparatus (400) according to claim 8 in which the error diffusion module (304, 404) is to diffuse a proportion of the scaled error to an element set of each of a plurality of print addressable areas.

12. The processing apparatus (400) according to claim 8, further comprising a print apparatus (408) to carry out a print operation according to the print control data.

13. A non-transitory machine readable medium (500) comprising instructions which, when executed by a processor (502), cause the processor (502) to:

select a print instruction for each of a plurality of print addressable areas from a plurality of element sets comprising material coverage vectors, wherein each element of each element set is associated with a value indicating a probability that the print material or print material combination identified by the element is applied to the print addressable area, where in the material coverage vectors are associated with received print input data; and

scale an error associated with selected first element set for a first print addressable area for use to transform material coverage vectors associated with candidate second and third print addressable areas, wherein the scaling is based on a value associated with an element in the first element set and a value associated with the corresponding element in the element sets for the candidate second and third print addressable areas such that diffusion of the error varies from the second print addressable area to the third print addressable area.

14. The non-transitory machine readable medium (500) according to claim 13 wherein the instructions further cause the processor (502) to determine print instructions for three-dimensional printing.

**Patentansprüche**

1.  Verfahren, das Folgendes umfasst:

Identifizieren, unter Verwendung eines Prozessors (502), innerhalb von Daten zur Verwendung bei einem Drucken, eines ersten Elementsatzes, der einem ersten druckadressierbaren Bereich zugeordnet ist, wobei Elemente des Elementsatzes jeweils einer Druckanweisung zugeordnet sind, wobei der erste Elementsatz einen ersten Materialabdeckungsvektor umfasst, in dem jedes Element des Elementsatzes einem Wert zugeordnet ist, der eine Wahrscheinlichkeit angibt, dass das Druckmaterial oder die Druckmaterialkombination, die durch das Element identifiziert wird, auf einen druckadressierbaren Bereich angewendet wird, Auswählen, unter Verwendung des Prozessors (502), eines Elements aus dem ersten Elementsatz und Zuweisen des Elements zu dem ersten druckadressierbaren Bereich;

Identifizieren, unter Verwendung des Prozessors (502), eines zweiten druckadressierbaren Bereichs als einen druckadressierbaren Kandidatenbereich für eine Fehlerdiffusion, wobei der zweite druckadressierbare Bereich einem zweiten Elementsatz zugeordnet ist, der einen zweiten Materialabdeckungsvektor umfasst, in dem jedes Element des Elementsatzes einem Wert zugeordnet ist, der eine Wahrscheinlichkeit angibt, dass das Druckmaterial oder die Druckmaterialkombination, die durch das Element identifiziert wird, auf einen druckadressierbaren Bereich angewendet wird;

Skalieren, unter Verwendung des Prozessors (502), eines Fehlers, der der Auswahl des Elements aus dem ersten Elementsatz basierend auf einem Kriterium zugeordnet ist, wobei das Kriterium zum Skalieren einen Wert, der einem Element in dem ersten Elementsatz zugeordnet ist, und einen Wert umfasst, der dem entsprechenden Element in dem zweiten Elementsatz zugeordnet ist, und

Diffundieren, unter Verwendung des Prozessors (502), des skalierten Fehlers auf Elemente des zweiten Elementsatzes.

2. Verfahren nach Anspruch 1, in dem ein Diffundieren des Fehlers Folgendes umfasst:

Bestimmen, unter Verwendung des Prozessors (502), eines Fehlervektors basierend auf dem ersten Materialabdeckungsvektor und dem zugewiesenen Element, wobei der Fehlervektor den ersten Elementsatz aufweist,

Bestimmen, unter Verwendung des Prozessors (502), eines Verhältnisses des Werts, der dem Element in dem zweiten Materialabdeckungsvektor zugeordnet ist, und des Werts, der dem entsprechenden Element in dem ersten Materialabdeckungsvektor zugeordnet ist, und Multiplizieren des Verhältnisses mit einem entsprechenden Element des Fehlervektors, wodurch der Fehler, der mit der Auswahl des zugewiesenen Elements zum Transformieren des entsprechenden Elements des zweiten Materialabdeckungsvektors verbunden ist, skaliert wird, und

Transformieren, unter Verwendung des Prozessors (502), des zweiten Materialabdeckungsvektors in einen fehlerdiffundierten Materialabdeckungsvektor durch Kombinieren des skalierten Fehlers und des entsprechenden Elements des zweiten Materialabdeckungsvektors, wobei der fehlerdiffundierte Materialabdeckungsvektor den zweiten Elementsatz aufweist.

3. Verfahren nach Anspruch 2, in dem ein Transformieren des zweiten Materialabdeckungsvektors ein Zuweisen einer Gewichtung zu jedem der Werte des Fehlervektors und ein Kombinieren der gewichteten Werte, die dem entsprechenden Element des Fehlervektors und des zweiten Materialabdeckungsvektors zugeordnet sind, umfasst.

4. Verfahren nach Anspruch 1, in dem ein Diffundieren des Fehlers Folgendes umfasst:

Bestimmen, unter Verwendung des Prozessors (502), eines dritten druckadressierbaren Bereichs, in dem der Fehler, der der Auswahl des Elements aus dem ersten Elementsatz zugeordnet ist, zu diffundieren ist, wobei der dritte druckadressierbare Bereich einem dritten Elementsatz zugeordnet ist, und

Diffundieren eines Anteils des skalierten Fehlers auf den zweiten druckadressierbaren Bereich und eines weiteren Anteils auf den dritten druckadressierbaren Bereich.

5. Verfahren nach Anspruch 4, in dem der skalierte Fehler in gleichen Anteilen auf den zweiten druckadressierbaren Bereich und auf den dritten druckadressierbaren Bereich diffundiert wird.

6. Verfahren nach Anspruch 4, in dem der skalierte Fehler gemäß einem Gewichtungswert, der dem zweiten druckadressierbaren Bereich und dem dritten druckadressierbaren Bereich zugeordnet ist, diffundiert wird, wobei der Gewichtungswert den Anteil angibt, in dem der skalierte Fehler in dem zugeordneten druckadressierbaren Bereich zu diffundieren ist.

7. Verfahren nach Anspruch 1, wobei der zweite druckadressierbare Bereich ein räumlicher Nachbar des ersten druckadressierbaren Bereichs ist.

8. Verarbeitungsvorrichtung (400), die Folgendes umfasst:

einen Speicher;
einen Prozessor (502), der mit dem Speicher gekoppelt ist;
ein Materialauswahlmodul (302, 402), das in dem Speicher gespeichert ist und dazu konfiguriert ist, den Prozessor (502) zu Folgendem zu veranlassen:

Empfangen von Daten zur Verwendung bei einem Drucken, wobei die Daten einen druckadressierbaren Bereich, der einem jeweiligen Elementsatz zugeordnet ist, charakterisieren, wobei Elemente des Elementsatzes jeweils einer Druckanweisung zugeordnet sind, wobei die Elementsätze Materialabdeckungsvektoren umfassen, in denen jedes Element des Elementsatzes einem Wert zugeordnet ist, der eine Wahrscheinlichkeit angibt, dass das Druckmaterial oder die Druckmaterialkombination, die durch das Element identifiziert wird, auf einen druckadressierbaren Bereich angewendet wird, und
Auswählen, aus einem ersten Elementsatz, eines Elements für einen ersten druckadressierbaren Bereich; und

ein Fehlerdiffusionsmodul (304, 404), das in dem Speicher gespeichert ist und dazu konfiguriert ist, den Prozessor (502) zu Folgendem zu veranlassen:

Skalieren eines Fehlers, der der Auswahl aus dem ersten Elementsatz zugeordnet ist, basierend auf einem Kriterium, und Diffundieren des skalierten Fehlers auf wenigstens einen zweiten druckadressierbaren Bereich, der in Daten zur Verwendung bei einem Drucken gekennzeichnet ist und einem zweiten Elementsatz zugeordnet ist, wobei der skalierte Fehler auf Elemente des zweiten Elementsatzes derart diffundiert wird, dass sich die Elemente in dem zweiten Elementsatz nicht ändern, wobei das Kriterium zum Skalieren einen Wert, der einem Element in dem ersten Elementsatz zugeordnet ist, und einen Wert umfasst, der dem entsprechenden Element in dem zweiten Elementsatz zugeordnet ist.

9. Verarbeitungsvorrichtung (400) nach Anspruch 8, in der das Materialauswahlmodul (302, 402) dazu dient, das Element eines Elementsatzes auszuwählen, das der höchsten Wahrscheinlichkeit zugeordnet ist, und das Fehlerdiffusionsmodul (304, 404) dazu dient, ein Verhältnis der Wahrscheinlichkeit, die einem Element des zweiten Elementsatzes zugeordnet ist, und der Wahrscheinlichkeit, die dem entsprechenden Element des ersten Elementsatzes zugeordnet ist, zu bestimmen und den Fehler, der der Auswahl aus dem ersten Elementsatz zugeordnet ist, basierend auf dem bestimmten Verhältnis, zu skalieren.

10. Verarbeitungsvorrichtung (400) nach Anspruch 9, in der das Fehlerdiffusionsmodul (304, 404) dazu dient, den skalierten Fehler durch Ändern der Wahrscheinlichkeit, die dem Element des zweiten Elementsatzes zugeordnet ist, zu diffundieren.

11. Verarbeitungsvorrichtung (400) nach Anspruch 8, in der das Fehlerdiffusionsmodul (304, 404) dazu dient, einen Anteil des skalierten Fehlers auf einen Elementsatz jeder der mehreren druckadressierbaren Bereiche zu diffundieren.

12. Verarbeitungsvorrichtung (400) nach Anspruch 8, die ferner eine Druckvorrichtung (408) umfasst, um einen Druckvorgang gemäß den Drucksteuerdaten durchzuführen.

13. Nichtflüchtiges maschinenlesbares Medium (500), das Anweisungen umfasst, die, wenn sie durch wenigstens einen Prozessor (502) ausgeführt werden, den Prozessor (502) zu Folgendem veranlassen:

Auswählen einer Druckanweisung für jeden von mehreren druckadressierbaren Bereichen aus mehreren Elementsätzen, die Materialabdeckungsvektoren umfassen, wobei jedes Element jedes Elementsatzes einem Wert zugeordnet ist, der eine Wahrscheinlichkeit angibt, dass das Druckmaterial oder die Druckmaterialkombination, die durch das Element identifiziert wird, auf einen druckadressierbaren Bereich angewendet wird, wobei die Materialabdeckungsvektoren empfangenen Druckeingabedaten zugeordnet werden; und
Skalieren eines Fehlers, der einem ausgewählten ersten Elementsatz für einen ersten druckadressierbaren Bereich zugeordnet ist, zur Verwendung, um Materialabdeckungsvektoren, die zweiten und dritten druckadressierbaren Kandidatenbereichen zugeordnet sind, zu transformieren, wobei das Skalieren auf einem Wert, der einem Element in dem ersten Elementsatz zugeordnet ist, und einem Wert, der dem entsprechenden Element in den Elementsätzen für den zweiten und dritten druckadressierbaren Kandidatenbereich zugeordnet ist, derart basiert, dass eine Diffusion des Fehlers von dem zweiten druckadressierbaren Bereich auf den dritten druckadressierbaren Bereich variiert.

14. Nichtflüchtiges maschinenlesbares Medium (500) nach Anspruch 13, wobei die Anweisungen den Prozessor (502) ferner dazu veranlassen, Druckanweisungen für dreidimensionales Drucken zu bestimmen.

**Revendications**

1. Procédé comprenant :

l'identification, à l'aide d'un processeur (502), à l'intérieur de données destinées à être utilisées dans l'impression, d'un premier ensemble d'éléments associé à une première zone adressable d'impression, des éléments de l'ensemble d'éléments étant chacun associés à une instruction d'impression, le premier ensemble d'éléments comprenant un premier vecteur de couverture de matériau dans lequel chaque élément de l'ensemble d'éléments est associé à une valeur indiquant une probabilité selon laquelle le matériau d'impression ou la combinaison de matériaux d'impression identifié par l'élément est appliqué à une zone adressable d'impression,

la sélection, à l'aide du processeur (502), d'un élément provenant du premier ensemble d'éléments et l'attribution de l'élément à la première zone adressable d'impression ;

l'identification, à l'aide du processeur (502), d'une deuxième zone adressable d'impression en tant que zone adressable d'impression candidate pour la diffusion d'erreur, la deuxième zone adressable d'impression étant associée à un deuxième ensemble d'éléments comprenant un second vecteur de couverture de matériau dans lequel chaque élément de l'ensemble d'éléments est associé à une valeur indiquant une probabilité selon laquelle le matériau d'impression ou la combinaison de matériaux d'impression identifié par l'élément est appliqué à une zone adressable d'impression ;

la mise à l'échelle, à l'aide du processeur (502), d'une erreur associée à la sélection de l'élément provenant du premier ensemble d'éléments sur la base d'un critère, le critère pour la mise à l'échelle comprenant une valeur associée à un élément dans le premier ensemble d'éléments et une valeur associée à l'élément correspondant dans le deuxième ensemble d'éléments, et la diffusion, à l'aide du processeur (502), de l'erreur mise à l'échelle à des éléments du deuxième ensemble d'éléments.

2. Procédé selon la revendication 1, dans lequel la diffusion de l'erreur comprend :

la détermination, à l'aide du processeur (502), d'un vecteur d'erreur sur la base du premier vecteur de couverture de matériau et de l'élément attribué, le vecteur d'erreur ayant le premier ensemble d'éléments,

la détermination, à l'aide du processeur (502), d'un rapport de la valeur associée à l'élément dans le second vecteur de couverture de matériau à la valeur associée à l'élément correspondant dans le premier vecteur de couverture de matériau, et la multiplication du rapport par un élément correspondant du vecteur d'erreur, mettant ainsi à l'échelle l'erreur associée à la sélection de l'élément attribué pour la transformation de l'élément correspondant du second vecteur de couverture de matériau, et

la transformation, à l'aide du processeur (502), du second vecteur de couverture de matériau en un vecteur de couverture de matériau à diffusion d'erreur en combinant l'erreur mise à l'échelle et l'élément correspondant du second vecteur de couverture de matériau, le vecteur de couverture de matériau à diffusion d'erreur ayant le deuxième ensemble d'éléments.

3. Procédé selon la revendication 2, dans lequel la transformation du second vecteur de couverture de matériau comprend l'attribution d'un poids à chacune des valeurs du vecteur d'erreur et la combinaison des valeurs pondérées associées à l'élément correspondant du vecteur d'erreur et du second vecteur de couverture de matériau.

4. Procédé selon la revendication 1, dans lequel la diffusion de l'erreur comprend :

la détermination, à l'aide du processeur (502), d'une troisième zone adressable d'impression dans laquelle l'erreur associée à la sélection de l'élément provenant du premier ensemble d'éléments doit être diffusée, la troisième zone adressable d'impression étant associée à un troisième ensemble d'éléments, et

la diffusion d'une proportion de l'erreur mise à l'échelle à la deuxième zone adressable d'impression et d'une autre proportion à la troisième zone adressable d'impression.

5. Procédé selon la revendication 4, dans lequel l'erreur mise à l'échelle est diffusée dans des proportions égales à la deuxième zone adressable d'impression et à la troisième zone adressable d'impression.

6. Procédé selon la revendication 4, dans lequel l'erreur mise à l'échelle est diffusée conformément à une valeur de pondération associée à la deuxième zone adressable d'impression et à la troisième zone adressable d'impression, la valeur de pondération indiquant la proportion dans laquelle l'erreur mise à l'échelle doit être diffusée dans la zone adressable d'impression associée.

7. Procédé selon la revendication 1, dans lequel la deuxième zone adressable d'impression est une voisine spatiale de la première zone adressable d'impression.

8. Appareil de traitement (400), comprenant :

une mémoire ;
un processeur (502) couplé à la mémoire ;
un module de sélection de matériau (302, 402) stocké sur la mémoire et configuré pour amener le processeur (502) à :

recevoir des données destinées à être utilisées dans l'impression, les données caractérisant une zone adressable d'impression associée à un ensemble d'éléments respectif, des éléments de l'ensemble d'éléments étant chacun associés à une instruction d'impression, les ensembles d'éléments comprenant des vecteurs de couverture de matériau, dans lesquels chaque élément de l'ensemble d'éléments est associé à une valeur indiquant une probabilité selon laquelle le matériau d'impression ou la combinaison de matériaux d'impression identifié par l'élément est appliqué à une zone adressable d'impression, et
sélectionner, à partir d'un premier ensemble d'éléments, un élément pour une première zone adressable d'impression ; et

un module de diffusion d'erreur (304, 404) stocké sur la mémoire et configuré pour amener le processeur (502) à :

mettre à l'échelle une erreur associée à la sélection à partir du premier ensemble d'éléments sur la base d'un critère, et diffuser l'erreur mise à l'échelle à au moins une deuxième zone adressable à l'impression **caractérisée par** des données destinées à être utilisées dans l'impression et associée à un deuxième ensemble d'éléments, l'erreur mise à l'échelle étant diffusée à des éléments du deuxième ensemble d'éléments de telle sorte que les éléments du deuxième ensemble d'éléments ne changent pas, le critère de mise à l'échelle comprenant une valeur associée à un élément dans le premier ensemble d'éléments et une valeur associée à l'élément correspondant dans le deuxième ensemble d'éléments.

9. Appareil de traitement (400) selon la revendication 8, dans lequel le module de sélection de matériau (302, 402) doit sélectionner l'élément d'un ensemble d'éléments associé à la probabilité la plus élevée, et le module de diffusion d'erreur (304, 404) doit déterminer un rapport de la probabilité associée à un élément du deuxième ensemble d'éléments à la probabilité associée à l'élément correspondant du premier ensemble d'éléments, et mettre à l'échelle l'erreur associée à la sélection à partir du premier ensemble d'éléments sur la base du rapport déterminé.

10. Appareil de traitement (400) selon la revendication 9, dans lequel le module de diffusion d'erreur (304, 404) doit diffuser l'erreur mise à l'échelle en changeant la probabilité associée à l'élément du deuxième ensemble d'éléments.

11. Appareil de traitement (400) selon la revendication 8, dans lequel le module de diffusion d'erreur (304, 404) doit diffuser une proportion de l'erreur mise à l'échelle à un ensemble d'éléments de chacune d'une pluralité de zones adressables d'impression.

12. Appareil de traitement (400) selon la revendication 8, comprenant en outre un appareil d'impression (408) pour effectuer une opération d'impression selon les données de commande d'impression.

13. Support non transitoire lisible par machine (500) comprenant des instructions qui, lorsqu'elles sont exécutées par un processeur (502), amènent le processeur (502) à :

sélectionner une instruction d'impression pour chacune d'une pluralité de zones adressables d'impression à partir d'une pluralité d'ensembles d'éléments comprenant des vecteurs de couverture de matériau, chaque élément de chaque ensemble d'éléments étant associé à une valeur indiquant une probabilité selon laquelle le matériau d'impression ou la combinaison de matériaux d'impression identifié par l'élément est appliqué à la zone adressable d'impression, les vecteurs de couverture de matériau étant associés à des données d'entrée d'impression reçues ; et
mettre à l'échelle une erreur associée au premier ensemble d'éléments sélectionné pour une première zone adressable d'impression destinée à être utilisée pour transformer des vecteurs de couverture de matériau associés aux deuxième et troisième zones adressables d'impression candidates, la mise à l'échelle étant basée sur une valeur associée à un élément dans le premier ensemble d'éléments et une valeur associée à l'élément correspondant dans les ensembles d'éléments pour les deuxième et troisième zones adressables d'impression candidates de telle sorte que la diffusion de l'erreur varie de la deuxième zone adressable d'impression à la troisième zone adressable d'impression.

14. Support non transitoire lisible par machine (500) selon la revendication 13, dans lequel les instructions amènent en outre le processeur (502) à déterminer des instructions d'impression pour l'impression tridimensionnelle.

Identify 1st element set associated with 1st print addressable area — 102

Select element and assign to 1st print addressable area — 104

Identify 2nd print addressable area as error diffusion candidate — 106

Scale error associated with the selection from the 1st element set — 108

Diffuse error to element(s) of 2nd element set — 110

**FIG. 1**

102 — Identify 1st element set associated with 1st print addressable area

104 — Select element and assign to 1st print addressable area

202 — Identify 2nd and 3rd print addressable area as error diffusion candidates

204 — Scale error

206 — Diffuse proportion of error to element(s) of $i$th element set

$i=i+1$

FIG. 2

FIG. 3

EP 3 520 028 B1

FIG. 4

FIG. 5

**EP 3 520 028 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070268525 A